(19) Europäisches Patentamt / European Patent Office / Office européen des brevets

(11) **EP 4 462 769 A1**

(12) **EUROPEAN PATENT APPLICATION**

(43) Date of publication:
**13.11.2024 Bulletin 2024/46**

(21) Application number: **23172098.8**

(22) Date of filing: **08.05.2023**

(51) International Patent Classification (IPC):
**H04N 7/14** *(2006.01)*    **G10L 13/00** *(2006.01)*
**H04M 3/56** *(2006.01)*    **H04R 3/00** *(2006.01)*
**H04S 7/00** *(2006.01)*    **H04R 27/00** *(2006.01)*

(52) Cooperative Patent Classification (CPC):
**H04N 7/147; G10L 13/02; H04S 7/302;**
H04M 3/567; H04M 3/568; H04R 3/005;
H04R 27/00; H04R 2430/23; H04S 1/007;
H04S 2400/11; H04S 2400/13

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **JANSE, Cornelis Pieter**
  **Eindhoven (NL)**
• **BLOEMENDAL, Brian Brand Antonius Johannes**
  **Eindhoven (NL)**
• **JANSSEN, Rik Jozef Martinus**
  **Eindhoven (NL)**
• **OOMEN, Arnoldus Werner Johannes**
  **Eindhoven (NL)**
• **RODRIGUEZ CANO, Luis Felix**
  **Eindhoven (NL)**
• **ROOS, Kees**
  **Eindhoven (NL)**

(74) Representative: **Philips Intellectual Property & Standards**
**High Tech Campus 52**
**5656 AG Eindhoven (NL)**

(54) **GENERATION OF AN AUDIOVISUAL SIGNAL**

(57)    An apparatus comprises receivers (101, 102) receiving microphone signals and a video signal capturing a scene. An image generator (113) generates an image signal comprising images generated from the video signal and a zoom determiner (115) determines a zoom property, such as a zoom factor, for the images. An audio component generator (107) generates a stereo signal component for a given mono audio signal to comprise the mono audio signal positioned at a position in a stereo image of the stereo signal component. A combiner (109) generates the stereo audio signal to include at least one stereo signal component and an output (111) generates the audiovisual signal to comprise the stereo audio signal and the image signal. In the approach the position is determined in dependence on the zoom property, and typically also dependent on a direction of arrival for the given mono audio signal. The approach may allow closer consistency between visual and auditory spatial cues.

EP 4 462 769 A1

**FIG. 1**

**Description**

FIELD OF THE INVENTION

The invention relates to generation of an audiovisual signal and, in particular but not exclusively, to generating an audiovisual signal comprising a stereo audio signal and an image signal for teleconferencing applications.

BACKGROUND OF THE INVENTION

Various applications and services based on capturing audio and video of a scene and transmitting a corresponding data signal to remote locations for local rendering have become ubiquitous. For example, in the latter years, various teleconferencing applications providing both audio and video have become extremely popular and an important part of the working environment as well as of everyday life. In recent years, various forms of remote speech and video communication applications using a range of different communication media (including, in particular, the Internet) have become increasingly popular and it is desired to further expand and improve on the provided services, options, and user experience.

Capturing audio, particularly speech, has become increasingly important in the last decades. Indeed, capturing speech has become increasingly important for a variety of applications including telecommunication, teleconferencing, gaming, audio user interfaces, etc. However, a problem in many scenarios and applications is that the desired speech source is typically not the only audio source in the environment. Rather, in typical audio environments there are many other audio/noise sources which are being captured by the microphone.

Remote speech communication using landline, mobile or Internet communication thus far has substantially been limited to the transmission of mono-speech content. However, the constraint of using mono signals may restrict the user experience. For example, teleconferencing applications based on mono signals may provide a limited representation of the environment in which the audio is captured. In particular, different from a face-to-face communication, the use of mono signals limits the ability of our spatial hearing to extract separate sources such as a desired speaker from a complex sound scene.

It has been proposed to introduce stereo communication to various remote speech and communication applications such as specifically Internet based remote conference applications. The introduction of stereo signals allows a spatial dimension to be communicated that may provide an improved user experience in many applications.

In general, a mono audio capture of a room tends to be perceived as limiting and not providing a sufficient user experience in many scenarios. It is in many applications desirable to include a spatial component, for example to facilitate differentiating between different speakers.

On the recording side, a stereo microphone may be used to capture spatial properties of the environment suitable for stereo distribution. Such a stereo microphone typically comprises two microphone elements with different directivities and with each microphone element capturing one channel of the stereo signal. There is a variety of recording techniques, with basically two beams, where one beam is formed in the left direction and the other beam is formed in the right direction. The two outputs are the Left and Right channel of the stereo pair. For example, with X/Y recording two identical cardioid microphones are placed on top of each other while facing away from each other at a 90 degree angle. The two microphones have different radiation/sensitivity characteristics, and the outputs are the L and R channel of the stereo pair.

In another example, with M(id)/S(ide) recording a Mid microphone with omni or cardioid characteristic is used that points to the middle of the scene and a Side microphone with a so-called figure of eight or dipole characteristic is mounted perpendicular on the Mid microphone. The sensitivity of a perfect dipole is the same for sources that are 180 degrees separated, but there is a phase shift of 180 degrees between the output signals. Using this effect one can create two new beams by adding or subtracting a (possibly) scaled version of the dipole output to the output of the Mid microphone. The beams can be in all directions, including the X/Y characteristic. Compared to the X/Y technique the M/S technique is more flexible: you can widen or narrow the stereo image by changing the coefficients in the mixing matrix.

However, whereas such approaches may provide desirable performance in many scenarios and applications, they are not optimal in all scenarios. For example, in many scenarios the spatial information may be relatively limited and, in particular, for sound sources in the far-field of the stereo microphone, it may be difficult to spatially separate the different sources. The approach may also tend to be relatively complex and resource demanding in many scenarios.

An additional complication exists for applications that include both audio and video in that the scene information is provided via different signals, paths, and processes. However, the different modalities are perceived as a single consistent input and therefore it is typically highly desirable that the audio and visual domains and renderings are consistent with each other. It is further desirable that this consistency is maintained for variations and adaptations on the audio and/or video side.

Hence, an improved approach would be advantageous, and in particular an approach allowing reduced complexity, increased flexibility, facilitated implementation, reduced cost, improved audio/ video capture, improved spatial perception/differentiation of sound sources, improved audio source separation, improved remote speech application support, improved teleconferencing support, improved consistency between audio and video, improved adaptation to video property variations, an improved user experience, and/or improved performance would be advantageous.

SUMMARY OF THE INVENTION

Accordingly, the invention seeks to preferably mitigate, alleviate or eliminate one or more of the above mentioned disadvantages singly or in any combination.

According to an aspect of the invention there is provided an apparatus for generating an audiovisual signal, the apparatus comprising: an audio receiver arranged to receive at least one microphone signal from a microphone arrangement capturing a scene having a plurality of audio sources; an extractor arranged to extract at least one mono audio signal representing an audio source of the plurality of audio sources from the at least one microphone signal; a video receiver arranged to receive a video signal from a camera capturing the scene; an image generator arranged to generate an image signal comprising images generated from the video signal; a zoom determiner arranged to determine a zoom property for the images; an audio component generator arranged to generate an intermediate stereo signal component for each of the at least one mono audio signal, a first intermediate stereo signal component for a first mono audio signal of the at least one mono audio signal comprising the first mono audio signal positioned at a first position in a stereo image of the first intermediate stereo signal component; a combiner arranged to generate the stereo audio signal to include at least one intermediate stereo signal component; an output for generating the audiovisual signal to comprise the stereo audio signal and the image signal; and wherein the audio component generator is arranged to determine the first position in dependence on the zoom property.

The approach may provide an improved user experience, operation and/or performance in many embodiments. In many scenarios, the approach may provide an improved consistency between spatial cues and information provided by audio and video/images of the audiovisual signal. The approach may allow a dynamic adaptation of audio to match that of images of the scene to provide an improved user experience.

The approach may allow an improved stereo signal with a stereo image that may provide improved user perception and experience in many embodiments and scenarios. The approach may allow for improved freedom in generating a suitable spatial arrangement of audio sources in a stereo image. The approach may typically reduce the sensitivity of the provided stereo image on the specific properties of the audio scene being captured and on the specific capture options. In particular, it may in many scenarios and applications allow increased flexibility in providing a stereo image that may be reflect properties of the audio scene yet not be fully constrained by these.

The approach may in many embodiments allow a substantially improved differentiation between audio sources and may in many scenarios allow a listener listening to the stereo image of the stereo signal to be able to separate and identify individual audio sources.

In many embodiments, a more well defined, and, e.g., point source, representation of each audio source may be provided.

The approach may in many embodiments facilitate or improve capturing spatial properties of audio sources and with these being represented (including being emphasized or modified) in the stereo image of the generated audio signal.

For example, the Inventors have realized that conventional capturing of stereo information by a stereo signal from a stereo microphone (or specifically two microphones with different directivity) tends to be insufficient for many applications. In particular, it is often difficult to separate audio sources in the far field and a conventional stereo signal representing the audio captured by a stereo microphone will tend to result in audio sources that are not well separable/differentiable and often not spatially well defined. The described approach may in many scenarios provide a stereo signal in which different audio sources are more clearly separable and differentiable and/or where the audio sources are spatially well-defined.

The approach may allow a stereo signal to be generated that may provide an improved spatial user experience to a person listening to the stereo signal.

The scene may be a real-world/physical scene, such as e.g., a room. The audio sources may be real world audio sources such as speakers in the scene/room.

The zoom property may be a variable zoom property/ parameter, such as specifically a variable zoom factor/level and/or a variable zoom direction (specifically the direction in which the images are zoomed in or out).

The mono audio signals may specifically be speech signals. The audio sources may specifically be speakers/participants in a teleconference.

In accordance with an optional feature of the invention, the zoom property comprises a zoom level/factor.

This may allow improved operation and/or performance in many embodiments and may typically provide an improved user experience.

In accordance with an optional feature of the invention, the zoom property comprises a zoom direction.

This may allow improved operation and/or performance in many embodiments and may typically provide an improved user experience.

In accordance with an optional feature of the invention, the apparatus further comprises a direction determiner arranged to determine a direction of arrival of audio from the audio source; and the audio component generator is arranged to determine the first position in dependence on the direction of arrival.

The approach may provide improved user experience, operation and/or performance in many embodiments. In many scenarios, the approach may provide an improved consistency between spatial cues and information provided by audio and video/images of the audiovisual signal. The approach may allow a dynamic adaptation of audio to match that of images of the scene to provide an improved user experience. It may for example allow the audiovisual signal to provide a spatial representation of the scene that more closely corresponds to the physical spatial properties of the scene. For example, it may allow the audiovisual signal to represent the audio sources with spatial properties matching those of the physical audio sources in the scene, including e.g., providing spatial information reflecting the relative positioning between audio sources.

The direction of arrival may in many embodiments be determined as a direction of an audio beam capturing the audio from the audio source.

In accordance with an optional feature of the invention, the audio component generator is arranged to set the first position to an end point position in the stereo image if the direction of arrival is outside a viewing area of the images for the zoom property.

This may allow improved operation and/or performance in many embodiments and may typically provide an improved user experience.

In accordance with an optional feature of the invention, the output is arranged to include an indication of the audio source being outside the images in response to a detection that the direction of arrival is outside a viewing area of the images for the zoom property.

This may allow improved operation and/or performance in many embodiments and may typically provide an improved user experience. In many embodiments, it may allow improved customization of the rendering of the audiovisual signal at a remote rendering device.

In accordance with an optional feature of the invention, the image generator is arranged to adapt a zoom parameter for the images in response to the direction of arrival.

This may allow improved operation and/or performance in many embodiments and may typically provide an improved user experience. The zoom control parameter may specifically be a control parameter for the zoom being applied to the images, and specifically may be parameter controlling the zoom factor and/or zoom direction that is applied to generate the images.

In accordance with an optional feature of the invention, the at least one microphone signal comprises a plurality of microphone signals and the extractor comprises a plurality of audio beamformers receiving the plurality of microphone signals, each audio beamformer being arranged to generate a beam audio signal representing audio captured by a beam formed by the audio beamformer, the mono audio signal being a beam audio signal of a first beam formed by a first audio beamformer of the plurality of beamformers, and the audio component generator is arranged to determine the first position in dependence on a direction of the first beam.

This may provide particularly advantageous operation and performance and may typically allow efficient and robust operation with advantageous effects and/or performance.

The beamformers may be arranged to receive a plurality of microphone signals from a plurality of microphones and may perform beamforming on the microphone signals. The plurality of microphones may form a microphone array (such as, e.g., with the plurality of microphones being arranged in a line). The beamforming may in some cases be performed by a weighted summation/combination of the microphone signals. In some cases, each filter may be filtered by adaptive filters before summation/combination. The adapter may be arranged to perform beamforming by adapting the coefficients/weights of the weighted summation or filtering.

The adapter may be arranged to adapt each audio beamformer of the plurality of audio beamformers to capture an audio source with the audio sources typically being different audio sources.

In accordance with an optional feature of the invention, the audio component generator is arranged to determine the first position to have an increasing distance to a center of the stereo image for the zoom property being indicative of an increasing zoom level.

This may allow improved operation and/or performance in many embodiments and may typically provide an improved user experience.

In accordance with an optional feature of the invention, the audio component generator is arranged to determine the first position to have a decreasing distance to a center of the stereo image for the zoom property being indicative of an increasing zoom level.

This may allow improved operation and/or performance in many embodiments and may typically provide an improved user experience.

In accordance with an optional feature of the invention, the audio component generator is arranged to adapt a level of the intermediate stereo signal component in the stereo audio signal in dependence on a zoom level indicated by the zoom property.

This may allow improved operation and/or performance in many embodiments and may typically provide an improved user experience.

In accordance with an optional feature of the invention, the audio component generator is arranged to adapt the level of the intermediate stereo signal component in the stereo audio signal in dependence on the first position relative to a viewing area of the images for the zoom level.

This may allow improved operation and/or performance in many embodiments and may typically provide an improved user experience. The viewing area may be a viewing angle/area (such as a viewport) comprising view directions of the scene included in the images for the current scale factor.

In some embodiments, the audio component generator is arranged to reduce the level of the intermediate stereo signal component in the stereo audio signal if the first position is outside a viewing area of the images for the zoom level.

This may allow improved operation and/or performance in many embodiments and may typically provide an improved user experience.

In some embodiments, the image generator is arranged to adapt a zoom control parameter for the images in response to a number of generated mono audio signals.

This may allow improved operation and/or performance in many embodiments and may typically provide an improved user experience.

In accordance with an optional feature of the invention, the apparatus is a teleconferencing apparatus further comprising a transmitter arranged to transmit the audiovisual signal to a remote teleconferencing device.

The approach may in many embodiments provide an improved teleconferencing apparatus. The teleconferencing apparatus may in many embodiments provide an improved stereo signal providing an improved representation of speakers, and typically allowing a clearer and easier differentiation between different speakers.

The mono audio signals may specifically be speech signals. The audio sources may specifically be speakers/participants in the teleconference.

According to an aspect of the invention there is provided a method of generating an audiovisual signal, the apparatus comprising: receiving at least one microphone signal from a microphone arrangement capturing a scene having a plurality of audio sources; extracting at least one mono audio signal representing an audio source of the plurality of audio sources from the at least one microphone signal; receiving a video signal from a camera capturing the scene; generating an image signal comprising images generated from the video signal; determine a zoom property for the images; generating an intermediate stereo signal component for each of the at least one mono audio signal, a first intermediate stereo signal component for a first mono audio signal of the at least one mono audio signal comprising the first mono audio signal positioned at a first position in a stereo image of the first intermediate stereo signal component; generating the stereo audio signal to include at least one intermediate stereo signal component; generating the audiovisual signal to comprise the stereo audio signal and the image signal; and determining the first position in dependence on the zoom property.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of elements of an apparatus generating a stereo audio signal in accordance with some embodiments of the invention;
FIG. 2 illustrates an example of elements of an apparatus generating a stereo audio signal in accordance with some embodiments of the invention;
FIG. 3 illustrates an example of an audio beamformer;
FIG. 4 illustrates an example of a viewing range for a camera;
FIG. 5 illustrates an example of geometric relationships between different origins for capturing audio or video; and
FIG. 6 illustrates some elements of a possible arrangement of a processor for implementing elements of an audio apparatus in accordance with some embodiments of the invention.

DETAILED DESCRIPTION OF SOME EMBODIMENTS OF THE INVENTION

The following description focuses on embodiments of the invention applicable to a speech and video capturing and communication system, such as specifically a teleconferencing apparatus for a teleconferencing application. However, it will be appreciated that the approach is applicable to many other systems and scenarios.

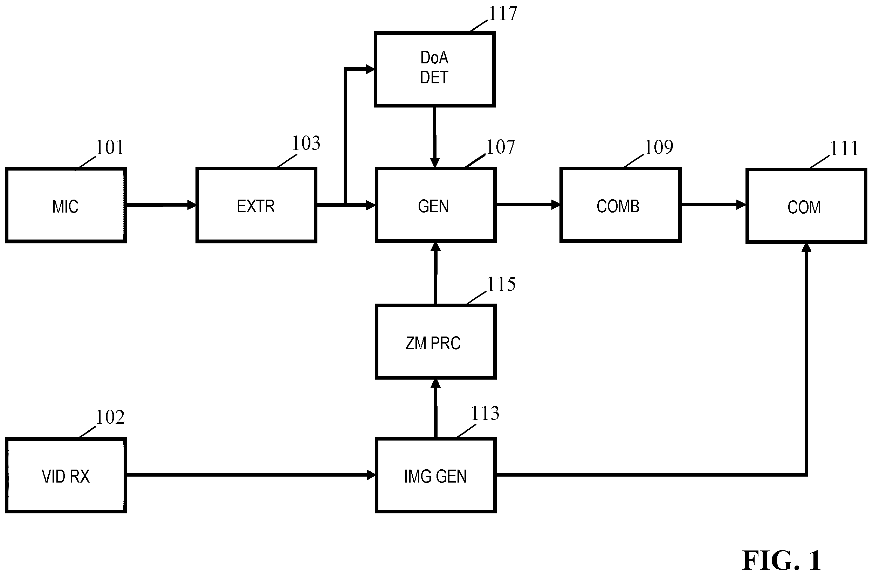

FIG. 1 illustrates an example of an audiovisual apparatus that is arranged to generate an audiovisual signal which includes audio and video of a capture of a real world scene. The audiovisual apparatus is in the specific example a teleconferencing device that is arranged to capture speakers in an environment/scene and transmit this to a remote device.

The audiovisual apparatus comprises an audio receiver 101 which is arranged to receive at least one microphone signal from a microphone arrangement that captures an environment/scene in which a plurality of sources may be present. The audio receiver 101 may specifically receive a single microphone signal from a single microphone positioned in an environment but in many embodiments a plurality of audio signals may be received such as specifically two microphone signals from a stereo microphone or even more microphone signals from a microphone array, such as e.g., from a linear array of 4, 8 or 16 microphones.

As a specific example, the audio receiver 101 may receive microphone signals from a microphone array that captures a plurality speakers present in a room and engaging in a teleconferencing application with a remote device/participant.

The audiovisual apparatus further comprises a video receiver 102 which is arranged to receive a video signal from a camera capturing the scene. The camera may for example be a built-in camera of the teleconferencing device, or may e.g., be an external camera such as a webcam, camcorder or any other camera capable of capturing images of a physical real world scene and generating a corresponding video signal.

Thus, the audiovisual apparatus receives signals that provide both a visual and auditory capture of the real-world/ physical scene, and in the specific example both a visual and auditory capture of a plurality of speakers located in the same room and participating in the same teleconference is performed and provided to the audiovisual apparatus/ teleconferencing apparatus in the form of a video signal and a number of microphone signals. The audiovisual apparatus is arranged to generate an output audio signal that includes a stereo signal providing a representation of the speaker(s) as well as an image signal comprising images of the scene. Thus, a combined visual and auditory presentation of the real-world scene/speakers is provided by the output audiovisual signal.

The apparatus may utilize a specific approach for generating an improved auditory presentation of the speakers and may for example ensure that there is an improved relationship, and typically increased consistency, between the audio representation and the visual presentation.

The apparatus comprises an extractor 103 which is coupled to the receiver 101 and which is fed the microphone signals. The extractor 103 is arranged to extract one or more mono audio signals that each represent an audio source of the plurality of audio sources in the scene. The extractor 103 accordingly generates a number of mono audio signal with each (of at least one or more) mono audio signals being an estimate of audio from one audio source. The extractor 103 is arranged to extract the mono audio signals from the microphone signal(s).

The extractor 103 may thus extract mono audio signals that typically each represent is an estimate of audio from a single audio source.

It will be appreciated that different approaches of extracting the mono audio signals from the received microphone signals may be used in different embodiments.

For example, in some cases, the extractor 103 may be arranged to extract a mono audio signal by selecting specific time intervals that are considered to correspond to one speaker/audio source. For example, a single microphone signal may be received and by the extractor 103 divided into consecutive time intervals, e.g., having a duration of, say, 20 msec. The extractor 103 may analyze the microphone signal in each time segment and based on the determined properties, the extractor may assign each segment to a given speaker identity out of a plurality of detected speakers. For example, the frequency distribution may be considered and compared to e.g., average frequency distributions stored for the different speaker identities, and each time segment may be assigned to the speaker identity with the closest match.

In other embodiments, different audio sources may be separated by filtering. For example, in embodiments where different audio sources have substantially different frequency spectra, the audio sources may be differentiated simply by filtering using filters with different passbands. For example, a base guitar and a guitar may be extracted/separated by filters with different passbands. In some cases, frequency filtering may even be used to differentiate different speakers, such as e.g., to differentiate between male and female voices.

Examples of algorithms that may be used to separate audio sources, and in particular multiple speakers, can be found in "Audio Source Separation and Speech Enhancement" by Emmanuel Vincent (Editor), Tuomas Virtanen (Editor), Sharon Gannot (Editor); October 2018; John Wiley & Sons; ISBN: 978-1-119-27989-1.

The following description will focus on an embodiment where mono audio signals are extracted by spatial differentiation, and specifically by using beamforms to form beams directed at specific audio sources.

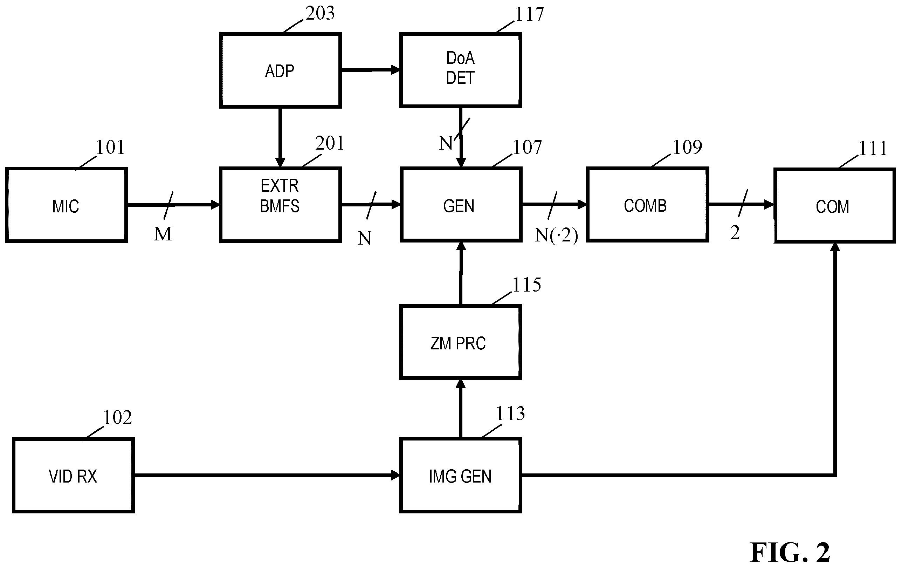

In particular, as illustrated in the specific example of FIG. 2, the extractor 103 comprises a set of beamformers 201 coupled to microphone array of M microphones via the audio receiver 101. In the example, the plurality of beamformers 201 is illustrated by a single functional unit (namely the extractor 103) reflecting that multiple beamformers 201 may typically be implemented by one processing/functional unit that performs the operations for all beamformers 201 (e.g. as parallel or sequential operations). Thus, the beamformers 201 can be considered equivalent to one beamformer 201 forming multiple beams.

Each of the beamformers 201 is arranged to form a beam and generate a mono audio signal representing the audio captured by that beam.

The number N of beamformers, and thus generated mono audio signals, may be different in different embodiments. In many embodiments, the number N of beamformers 201 may be no less than 2, 3, 5 or even 10 beamformers. In many embodiments, the number N of beamformers may be no more than 5, 10, or 20 beamformers. In many embodiments, the system may be designed to include a number of beamformers corresponding to a (maximum) number of speakers/ audio sources desired to be individually represented by a mono audio signal.

The beamformers 201 are coupled to an adapter 203 which is arranged to adapt the beamformers, and specifically the adapter 203 is arranged to adapt the beamformers 201 to adapt the formed beam, including directing the beam towards a detected audio source and typically dynamically adapting the beam to follow (tracking) the audio source as it moves.

The adapter 203 may in many embodiments also comprise functionality for searching for /detecting new audio sources towards which new beams may be formed, determining when to stop tracking an audio source, switching beams towards new audio sources, etc. For example, the adapter 203 may control a beamformer to search for an audio source, and to track any detected audio sources as long as an average signal level (e.g., averaged over a sufficiently long time interval to compensate for speech pauses) is above a threshold, and to stop tracking an audio source and search for a new audio source otherwise.

The beamformers 201 are accordingly adaptive beamformers where the directivity can be controlled by the adapter 203 adapting the parameters of the beamform operation.

Each of the beamformers 201 may specifically be a filter-and-combine (and in most embodiments a filter-and-sum) beamformer. A beamform filter may be applied to each of the microphone signals and the filtered outputs may be combined. In some embodiments, the combination may e.g. include functions being applied to different signals (such as e.g. a frequency compensation to compensate for different frequency sensitivities of different microphones, a varying delay, a non-linear gain compensation etc.). However, typically the outputs of the filters are simply added together such that the filter-and-combine beamformer specifically is implemented as a filter-and-sum beamformer.

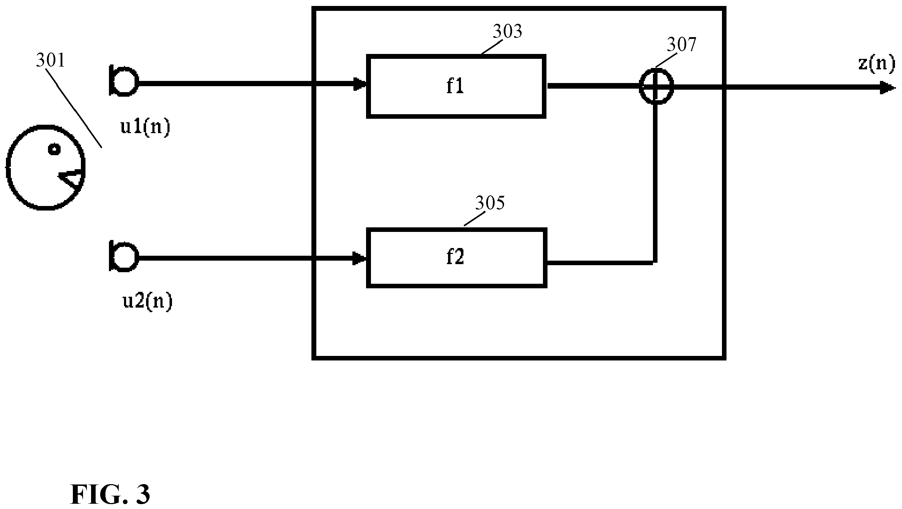

FIG. 3 illustrates a simplified example of a filter-and-sum beamformer based on a microphone array comprising only two microphones 301. In the example, each microphone is coupled to a beamform filter 303, 305 the outputs of which are summed in summer 307 to generate a beamformed audio output signal. The beamform filters 303, 305 have impulse responses f1 and f2 which are adapted to form a beam in a given direction. It will be appreciated that typically the microphone array will comprise more than two microphones and that the principle of FIG. 3 is easily extended to more microphones by further including a beamform filter for each microphone.

Each of the beamformers may include such a filter-and-sum architecture for beamforming (as, e.g., described in US 7 146 012 and US 7 602 926). It will be appreciated that in many embodiments, the microphone array 301 may however comprise more than two microphones.

In most embodiments, each of the beamform filters has a time domain impulse response which is not a simple Dirac pulse (corresponding to a simple delay and thus a gain and phase offset in the frequency domain) but rather has an impulse response which typically extends over a time interval of no less than 2, 5, 10 or even 30 msec.

The impulse response may often be implemented by the beamform filters being FIR (Finite Impulse Response) filters with a plurality of coefficients. The adapter 203 may in such embodiments adapt the beamforming by adapting the filter coefficients. In many embodiments, the FIR filters may have coefficients corresponding to fixed time offsets (typically sample time offsets) with the adaptation being achieved by adapting the coefficient values. In other embodiments, the beamform filters may typically have substantially fewer coefficients (e.g., only two or three) but with the timing of these (also) being adaptable.

A particular advantage of the beamform filters having extended impulse responses rather than being a simple variable delay (or simple frequency domain gain/phase adjustment) is that it allows the beamformer to not only be adapted to the strongest, typically direct, signal component. Rather, it allows the beamformer to be adapted to include further signal paths corresponding typically to reflections. Accordingly, the approach allows for improved performance in most real environments, and specifically allows improved performance in reflecting and/or reverberating environments and/or for audio sources further from the microphone array.

A critical element of the performance of an adaptive beamformer is the adaptation of the directionality (generally referred to as the beam although it will be appreciated that the extended impulse responses results in this directivity having not only a spatial component but also a temporal component, i.e., the beam formed as a temporal variation for reflections etc.).

In the system of FIG. 2, the adapter 203 is arranged to adapt the beamform parameters of the beamformers, and specifically, it is arranged to adapt the coefficients of the beamform filters to provide a given (spatial and temporal) beam.

It will be appreciated that different adaptation algorithms may be used in different embodiments and that various optimization parameters will be known to the skilled person. For example, the adapter 203 may adapt the beamform parameters to maximize the output signal value of the beamformer. As a specific example, consider a beamformer where the received microphone signals are filtered with forward matching filters and where the filtered outputs are added. The output signal is filtered by backward adaptive filters, having conjugate filter responses to the forward filters (in the frequency domain corresponding to time inversed impulse responses in the time domain). Error signals are generated as the difference between the input signals and the outputs of the backward adaptive filters, and the coefficients of the filters are adapted to minimize the error signals thereby resulting in the maximum output power. This can further inherently generate a noise reference signal from the error signal. Further details of such an approach can be found in US 7 146 012 and US 7 602 926.

It is noted that approaches such as that of US 7 146 012 and US 7 602 926 are based on the adaptation being based both on the audio source signal z(n) and a noise reference signal(s) x(n) from the beamformers, and it will be appreciated that the same approach may be used for the beamformer of FIGs. 2 or 3.

Indeed, the beamformers 201 may specifically be beamformer arrangements corresponding to those disclosed in US 7 146 012 and US 7 602 926.

The adapter 203 may be arranged to adapt the beamforming to capture a desired audio source and represent this in the beamformed audio output signal. It may further generate a noise reference signal to provide an estimate of the remaining captured audio, i.e., it is indicative of the noise that would be captured in the absence of the desired audio source.

In examples where the beamformers 201 may be beamformers such as those disclosed in US 7 146 012 and US 7 602 926, the noise reference may be generated as an error signal. However, it will be appreciated that other approaches may be used in other embodiments. For example, in some embodiments, the noise reference may be generated as the microphone signal from an (e.g., omnidirectional) microphone minus the generated beamformed audio output signal, or even the microphone signal itself in case this noise reference microphone is far away from the other microphones and does not contain the desired speech. As another example, the set of beamformers 201 may be arranged to generate a second beam having a null in the direction of the maximum of the beam generating the beamformed audio output signal, and the noise reference may be generated as the audio captured by this complementary beam.

In some embodiments, post-processing such as noise suppression may be applied to the output of the audio capturing apparatus. This may improve performance for, e.g., voice communication. In such post-processing, non-linear operations may be included, although it may, e.g., for some speech recognizers, be more advantageous to limit the processing to only include linear processing.

The adapter 203 is thus arranged to control the beamformers to search for an audio source and when an audio source is detected, the adapter 203 may dynamically adapt the beam to follow/track the audio source. In some embodiments, the adapter 203 may further adapt the beam shape, such as, e.g., narrowing the beam following the initial detection.

In the specific example, the apparatus is specifically aimed at capturing speech signals from speakers in the environment. In this example, the adapter 203 may be arranged to include considerations in the adaption of whether the audio source is indeed a speech signal or not. For example, the adapter 203 may for a given detected audio source extract properties of the captured audio (such as frequency distribution, activity patterns, etc.) and determine whether these match properties expected for a speech signal. If so, the adapter 203 may continue to track the audio source and otherwise it may reject the audio source and proceed to search for another audio source that does represent a speaker.

Thus, the beamformers form beams towards detected audio sources, which specifically may be different speakers in an environment. Each beamformer provides a single mono audio signal that represents the audio that has been captured in the beam formed by that beamformer. Thus, a plurality of mono signals is generated by the set/bank/plurality of beamformers with typically each mono signal representing a different audio source/speaker in the environment.

The extractor 103 (and in the example of FIG. 2 the plurality of beamformers) is coupled to an audio component generator 107 which is arranged to generate an intermediate stereo signal component for one, more, and typically all of the mono audio signals. For a given mono audio signal, the generator 107 is arranged to generate the intermediate stereo signal component to be a stereo signal component in which the mono audio signal is positioned at a given position in the stereo image of the intermediate stereo signal component. The intermediate stereo signal component comprises two channels, namely a first and second channel which may correspond to a left and right channel (or vice versa) respectively. Thus, rather than the mono audio signal which has a single value at any given time instant (specifically one sample value per sample instant), the intermediate stereo signal component has two values, namely one for a left channel and one for a right channel. The two component stereo representation thus creates a stereo image ranging from a left position corresponding to the rendering position for the left channel to a right position corresponding to the rendering position for the right channel (and vice versa).

The generator 107 is arranged to generate the intermediate stereo signal components from the mono audio signals such that the mono audio signals are positioned at positions in the stereo image which may be selected/determined to be desired positions.

Specifically, for a given mono audio signal from a given beamformer, the generator 107 may proceed to generate the intermediate stereo signal component for that mono audio signal to in at least some scenarios have a specific position in the stereo image, where that position is determined in response to the direction of arrival for the corresponding audio and based on e.g. a position of the speaker in the images of the received video signal as will be described later.

In many examples, the intermediate stereo signal component for a given mono audio signal is generated to have a left and right channel component that include the mono audio signal. The phase of the mono audio signal in the left and right channel is typically the same and the position in the stereo image is controlled by adapting the relative level/amplitude/signal strength in the two channels. If the level of the left channel is non-zero and the level in the right channel is zero or close to zero, the position of the mono audio signal is in the stereo image perceived to be at the rendering position of the left channel. If the level of the right channel is non-zero and the level in the left channel is zero or close to zero, the position of the mono audio signal is in the stereo image perceived to be at the rendering position of the right channel. If the level is the same in the two channels, the perceived position is in the middle of the stereo image, and for other relative amplitude levels the perceived position will be somewhere between the left rendering position and the right rendering position. Thus, in many embodiments, the generator 107 may be arranged to perform amplitude panning to position a given mono audio signal at a desired position in the stereo image of the intermediate stereo signal component representing that mono audio signal.

The generator 107 may be arranged to position a mono audio signal in the stereo image of the corresponding intermediate stereo signal component by performing a scaled addition of the first mono audio signal to the two channels of the intermediate stereo signal component where the relative scale factor between the two channels (i.e. the right and left channel) depends on the position in the stereo image that is desired for the mono audio signal/audio source.

In many embodiments, the generator 107 may be arranged to determine a separate (scalar) scale factor for respectively the left and right channel of the intermediate stereo signal component. The two scale factors may be determined as a suitable function of the desired position/the direction of arrival, such as, e.g., as a function of an angular position $\phi$ indicative of the direction of arrival/angle of incidence which specifically may be indicated by the direction/angle of the beam.

As a specific example, the left, L, and right, R, channels of the intermediate stereo signal component are determined using amplitude panning, according to:

$$Li = f(\phi_i) \cdot Si$$

$$Ri = (1 - f(\phi_i)) \cdot * Si$$

where $f(\phi_i)$ is a function of the beam direction/angle of incidence $\phi$ for beamformer i with the function being bounded between 0 and 1. Si is the mono audio signal of the beam/beamformer with index i (and $\cdot$ indicates the multiplication operation).

Considering the beamforming to be based on a linear array and defining $\phi_i$ to be an angle in the range/interval between $-\pi/2$ and $+\pi/2$, then for example $f(-\pi/2)$ can be set to zero, and $f(\pi/2)$ may be set to 1, such that the full range/interval of the stereo image between the left and right loudspeaker is used during reproduction.

In some embodiments, the generator 107 may be arranged to determine a scale factor/gain/amplitude for one of the channels as a function of the direction of a beam of a beamformer generating the first mono audio signal, and then determine the scale factor/gain/amplitude for the second channel such that a sum of the two scale factors/gains/amplitudes meets a criterion. It will be appreciated that this is equivalent to the two scale factors being determined by two functions (one for each scale factor) but with the functions being designed such that the sum of the scale factors meet the criterion.

The criterion may specifically be that the two scale factors must add up to a given value. The value may typically be a predetermined value, such as a fixed value. As a specific example, the above two functions for the scale factors for respectively the left and right channel will always sum to one, indeed the function for the left channel is simply given as one minus the scale factor for the right channel.

The generator 107 may accordingly be arranged to generate the intermediate stereo signal component such that the mono audio signal is positioned at a desired angle in the stereo image by determining the relative amplitude of the mono audio signal in the left and right channel corresponding to the determined angle.

Thus, the generator 107 may typically generate a plurality of intermediate stereo signal components with each of these typically corresponding to one audio source, and for the specific teleconferencing application typically with each intermediate stereo signal component representing a specific speaker. Further, the position in the stereo image in each intermediate stereo signal component may be determined e.g., to allow speakers to be perceived as being at different positions in the scene.

As will be described later, this positioning may be subject to and dependent on a zoom property for the images of the output audiovisual signal.

The generator 107 is coupled to a combiner 109 to which the generated intermediate stereo signal components are fed. The combiner 109 is arranged to generate a stereo audio signal which (for at least some time intervals) includes at least some of the intermediate stereo signal components. In many embodiments, the stereo audio signal is generated to include all the intermediate stereo signal components received from the generator 107.

The combiner 109 may in many embodiments simply add all the left channel signals/values together and all the right channel signals/values together from, e.g., all the intermediate stereo signal components. Thus, the combiner 109 may in many embodiments perform a summation of the channels of (at least some of) the intermediate stereo signal components. In some embodiments, the combiner 109 may not just simply add the different intermediate stereo signal components together but may include, e.g., adapting the relative levels of different intermediate stereo signal component, select a subset of intermediate stereo signal components, filter one or more of the intermediate stereo signal components etc.

Thus, the combiner generates the stereo audio signal such that the intermediate stereo signal components retain their position in the stereo image, i.e., the position of a given mono audio signal in the stereo image of the stereo audio signal is the same as the position of the mono audio signal in the corresponding intermediate stereo signal component.

In particular, in some embodiments, the summation may be a weighted summation where different intermediate stereo signal components may be weighted differently (but with the weight for the different channels being the same for the same intermediate stereo signal component).

The combiner is in the specific example coupled to an output/communicator 111 which is arranged to generate an audiovisual signal that comprises the stereo signal as well as an image signal generated from the received video signal as will be described in more detail later.

The communicator 111 may for example transmit the audiovisual signal over a network, such as specifically the Internet, a radio communication link, a dedicated link, or any link that allows audio data to be communicated.

Further, the communicator 111 may be arranged to encode and transmit the audiovisual signal in any suitable way, including using different audio and/or video encoding approaches, speech signal encoding approaches, suitable modulation and coding techniques etc., as will be well known to the skilled person.

In the specific example of a teleconferencing application, the apparatus may thus generate an audiovisual signal that is transmitted to one or more remote devices participating in the teleconference. The audiovisual signal includes a stereo audio signal that includes audio corresponding to typically different speakers, with the different speakers being positioned in the stereo image. It further comprises an image signal (specifically a video signal) that comprises images of the scene.

A receiving teleconferencing device may simply render the received stereo signal to provide a user with a spatial perception and representation of the speakers. For example, the stereo audio signal may simply be appropriately decoded and presented using a pair of headphones/earphones.

More generally, a stereo signal may be provided which represents different audio sources, such as different instruments, at different positions of a stereo image of the stereo signal.

Thus rather than pursuing a conventional approach of capturing a stereo signal with a stereo image by capturing two channels in the environment, such as by using a stereo microphone or other stereo capture configuration, the approach may use a dedicated approach where multiple audio beams are used to select and isolate individual audio sources, such as specifically speakers, followed by a construction of a stereo image in which the audio sources may be positioned at specific positions.

The audiovisual apparatus is as mentioned further arranged to generate an image signal/video signal from the received video signal and to include this generated image signal in the output audiovisual signal.

The video receiver 102 is coupled to an image generator 113 which is arranged to generate an image signal comprising images generated from the video signal.

In some embodiments, the image generator 113 may simply generate the image signal to include images/frames of the received video signal from the camera, and indeed the received video signal may in some cases directly be used as the image signal (possibly after removing some overhead data or metadata).

In many embodiments, the image generator 113 may be arranged to perform a processing of the images/frames of the video signal to generate the image signal. For example, in some embodiments, it may change the frame rate and/or e.g., the resolution of the images. Alternatively or additionally, the image generator 113 may be arranged to re-encode the video images/frames, or may e.g., modify these by performing noise reduction, color grading, dynamic range conversion, or any other suitable or appropriate image processing.

In some embodiments, the image generator 113 may be arranged to generate the images of the image signal by performing a dynamic zoom on some or all of the images/frames received from the camera. The image generator 113 may be arranged to perform a digital zoom on the received images, such as for example by selecting a sub-area of the received images.

In other embodiments, the camera may be controlled to provide a dynamically varying zoom and the received images may reflect different zooms and view port sizes of the scene. In other embodiments, a varying zoom may be applied by the camera and the captured images may reflect the current zoom. The received video signal from the camera may comprise frames and images that have a varying zoom and which may provide viewports of the scene of different sizes.

The zoom may in some embodiments for example be controlled manually by a user, e.g., directly by the user controlling the camera or a digital zoom of the image generator 113. Indeed, in some embodiments, the zoom may be controlled by a remote user of the teleconferencing application via a data signal received from a far end teleconferencing device.

The image generator 113 is coupled to the communicator 111 which is fed the image signal generated by the image generator 113. The communicator 111 includes the images signal in the audiovisual signal. Thus, the audiovisual signal may be generated to include the generated image signal together with the generated stereo audio signal to provide a combined audiovisual signal that provides both visual and auditory perceptual (including spatial) information on the captured scene. The audiovisual signal may then for example be transmitted or distributed to one or more remote devices/destinations. For example, for a teleconferencing application the audiovisual signal may be transmitted to a remote device which directly may display the image signal and render the stereo signal over loudspeakers or headphones.

In the system, the generated images that may be transmitted to other parties, such as e.g., to the remote end for a teleconferencing application, may vary dynamically with the zoom factor and/or direction dynamically adapted.

As an example, the audiovisual apparatus may be a teleconferencing arrangement which is arranged to transmit an image signal comprising images/video of the room with the active participants shown in the image.

For example, in some embodiments, the image generator 113 may effectively implement a function corresponding to an "automatic camera man" including automatically zooming in and out on persons, e.g., in line with the persons being active speakers or not. For example, in a scenario where two speakers are present in the room, the image generator 113 may generate images that include both speakers when both are active or when none is active. However, if only one speaker is active, the image generator 113 may zoom in on that speaker so that the generated images comprise only that speaker. This may for example be achieved by a selection of image areas of the input images, or by the image generator 113 controlling the camera to increase the zoom factor and be directed towards the person speaking.

It is desirable that there is a consistency between the visual and auditory perceptions of an audiovisual signal comprising both audio and video, such as e.g., in the example of a teleconferencing application. The visual representation inherently provides spatial information of the scene to remote participants. However, if only a mono representation of the audio is provided, there is no inherent spatial information provided. Indeed, with a typical setup with loudspeakers close to the left and right side of the screen, all audio will typically be perceived as originating at the center of the screen. Consequently, the user will perceive the audio to be inconsistent with the provided image.

In the case of the audiovisual apparatus of FIGs. 1 or 2, a stereo signal is generated and transmitted with an image signal and this allows the audio to also provide spatial information to the user. However, it is highly desired for such spatial information provided by both the video and audio modalities to be consistent.

E.g., in an example where two speakers are present in the image (one left in the image, one right in the image), then the audio would in typical approaches normally also represent the left speaker to the left (e.g., panning to the left loudspeaker) and the right speaker to the right (e.g., panning to the right speaker). However, if the left speaker stops talking and an automatic cameraman zooms (could be controlled by the audio) in on the remaining right speaker, and places him in the middle of the screen, it will be perceived to be incongruous to the remote user that the audio image has the speaker on the right of the provided stereo image.

The apparatus of FIGs. 1 and 2 may provide a more flexible approach that may typically be perceived to provide a much improved spatial user experience. The approach may, in particular, generate a stereo audio signal that provides a spatial perception which is more consistent with, and which follows changes in, the visual spatial position provided by the image signal, thereby providing a much more consistent overall spatial perception.

The audiovisual apparatus comprises a zoom processor 115 which is arranged to determine a zoom property for the images. The zoom property may specifically be a zoom factor/level and/or a zoom direction. For example, for a digital zoom performed by the image generator 113, the zoom processor 115 may determine the zoom factor as the proportion of the received images/frames that are included in the images generated by the image generator 113. A zoom factor of one may correspond to the entire image, a zoom factor of 2 may correspond to the output images representing a quarter of the original images (a scale factor of two being applied in both the horizontal and vertical directions), etc.

The zoom factor may typically be determined as an integral part of the zoom operation. Most zoom operations include having a parameter that directly indicates the zoom factor that is currently applied and this parameter may often be used directly by the zoom processor 115 or may be converted into a different and e.g., more suitable zoom factor indication.

In some embodiments, the zoom property may be indicative of a direction of the zoom being performed. For example, if the camera is controlled to zoom in to a specific object or part of the scene, the zoom factor may be increased and the capture direction may be changed (the camera may be physically controlled to do so, e.g., by a controlled re-orientation of the camera). The zoom indication may reflect the capture direction. Similarly, if a digital zoom is performed by essentially selecting a sub-area of the received frames for the output images, the zoom indication may indicate which area of the input frames is selected.

In many embodiments, the audiovisual apparatus comprises a direction determiner 117 which is arranged to determine a direction of arrival for audio from one or more audio sources in the scene. In many embodiments, such as illustrated in FIG. 2, the direction determiner 117 may be arranged to determine the direction of arrival as a direction of a beam formed towards the audio source. In many cases the beam direction may for example be determined from coefficients determined by the adapter 203. In such cases the direction of arrival may be considered identical to the beam direction.

Thus, in many embodiments, the audiovisual apparatus comprises a direction determiner 117 which is arranged to determine a direction of audio captured by the beams formed by the plurality of audio beamformers. For each beamformer/beam, the direction determiner 117 may thus determine the direction of the audio that is captured by that beam. Specifically, each beamformer/beam may track one audio source, such as a speaker, and the direction determiner 117 may be arranged to determine the direction to that audio source (in many cases by considering the direction of the beam formed to be the direction to the audio source).

In many embodiments, the direction of the captured audio may be determined as the direction of the beam that is formed. Thus, the direction determiner 117 may be arranged to determine the directions of the beams that are formed by the beamformers and with this direction being used to indicate the direction towards the audio source captured by the beam. This will typically provide a very accurate estimate of the direction towards the audio source captured by the audio beam as the adapter 203 may control the beam to detect and then follow the audio source. Typically, the beam will be directed in the direction in which the audio arrives at the microphone array, and thus the beam direction reflects the (main) direction of arrival for the audio captured by the beam (typically the direction of arrival of the direct path rather than of reflections), and accordingly from the audio source being detected. The determined direction will typically reflect the direction from which the audio source would be perceived to arrive from to a person positioned at the position of the microphone array.

It will be appreciated that many different approaches for determining a direction of a formed audio beam is known and that the direction determiner 117 may use any suitable approach. In some embodiments, the direction determiner 117 may for example evaluate the coefficients applied to each microphone signal or the taps of the beamform filters to determine a beam direction of the beam.

For example, if a beamformer forms a beam by a weighted combination of the signals from a plurality of substantially omnidirectional microphones (typically using complex weights to represent both an amplitude and phase/delay), the direction of the beam can readily be determined from the applied coefficients as will be known to the skilled person.

As another example, if a beamformer is based on only two microphone inputs and are implemented in the frequency domain with filter coefficients F1 and F2 belonging to the two microphones 1 and 2 respectively, the inverse Fourier transform may be taken of the product $F1 \cdot F2^*$, with * representing the conjugate, and from this cross-correlation the peak is determined, from which a difference in travel time td can be calculated. The difference in travel time is related to the angle of incidence $\phi_i$ by the formula:

$$\cos(\phi_i) = td \cdot c / d,$$

where c is the speed of sound and d the distance between the two microphones. Suitable exemplary approaches may for example be found in US 6 774 934 or in "Fast Cross-correlation for TDOA Estimation on Small Aperture Microphone Arrays" by F. Grondin et al, arXiv:2204.13622.

In some embodiments, the beam may not directly follow/track an audio source but may for example change slower than the audio source moves or be relatively constant. In many cases, such a discrepancy may be acceptable, and the direction of the beam may be used directly as an estimate for the direction of arrival for the captured audio. However, in some embodiments, the direction of arrival may be determined to not directly be equal to the direction of the beam being formed. For example, in some embodiments, the direction determiner 117 may not directly consider the coefficients used by the beamformers but may use a different algorithm to detect a direction of arrival for an audio signal captured by the microphone array, and such an algorithm may, e.g., directly consider and be based on the microphone signals independently of the beamforming. The direction of arrival may for example be determined as the strongest detected audio signal within an angle interval corresponding to a beam angle interval for a given beamformer/beam. This direction of arrival may then be used as the direction for the corresponding mono signal generated by that beamformer.

The direction determiner 117 is coupled to the generator 107 which is fed the direction estimates (e.g., in the specific example the directions of the different beams). Thus, the generator 107 receives the mono audio signals from the beamformers 201/ extractor 103 as well as direction estimates for each beam/beamformer.

In many embodiments, the generator 107 is arranged to generate the intermediate stereo signal components from the mono audio signals such that the mono audio signals are positioned at positions in the stereo image which are dependent on the direction of arrival/direction estimates.

For example, if the zoom property meets a given criterion, the generator 107 may be arranged to position the mono audio signals from each individual beam/beamformer dependent on the direction of that beam. This may for example specifically be the case in scenarios where the zoom factor is sufficiently low for all speakers to be included in the image. For example, the nominal setting for the camera may be that it captures a sufficiently wide angle image that includes all possible speaker positions. In this case, the generator 107 may for example proceed to generate the position for each mono audio signal to match the direction determined by the direction determiner 117.

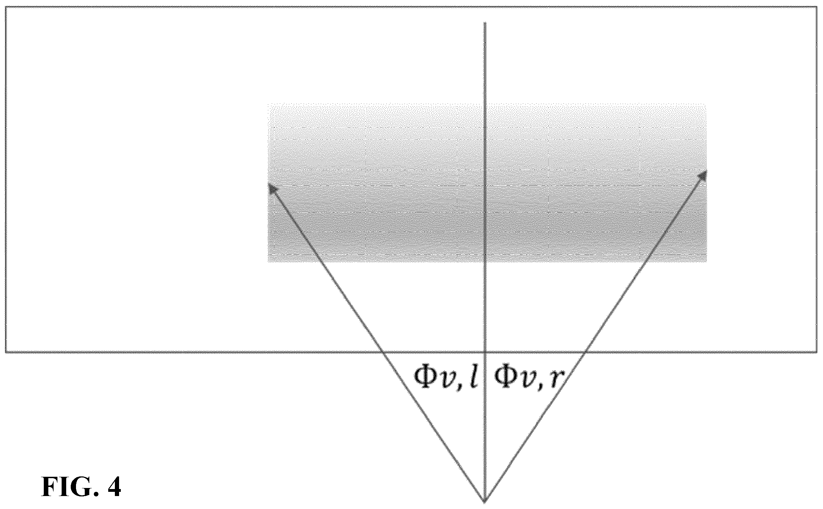

As illustrated by FIG. 4, a camera may have a given angular range at the lowest zoom level corresponding to $[\Phi_{v,l}, \Phi_{v,r}]$ from a given camera position. The microphone array may be colocated with the camera and may provide beams in an angular direction within a given range $[\Phi_{a,l}, \Phi_{a,r}]$. The origin of a polar coordinate system may be in the center of the camera. In many cases in e.g., video conferencing, a linear microphone array that is located symmetrically around the camera is used for the audio, such that the polar coordinate system of the video and audio have the same origin, namely the center of the camera. In this case the mapping from the video to audio spatial information is rather straight forward. The direction of arrival of the audio may then be represented by an angular value and this may be mapped to an angular direction in the video range. The audio angle may then be mapped to an angle in the stereo signal such that for example for any angle within the angular range of the camera, and thus of the received video signal, is mapped directly to the corresponding angle in the stereo image. However, for any angle outside the angular video capture range of the capture is mapped to the nearest endpoint angle of the capture range.

For example, if the camera is arranged to capture a wide angle image with an angular range of [-60°,60°] and the microphone and beamform arrangement are capable of capturing and determining angular directions in the angular range of [-90°,90°], then the mapping of the angular direction of arrival to the video angular range may be such that the angular direction of arrival is unchanged for the interval of [-60°,60°], set to -60° for angles below -60°, and set to 60° for angles above 60°. Thus, the angular direction of arrival may be constrained to be within the angular range of the captured frames of the video signal.

The generator 107 may then be arranged to map the constrained angular direction of arrival to an angular range of the stereo image of the intermediate stereo signal components and the stereo signal. For example, the angular range may be scaled to correspond to the entire stereo image with one endpoint being mapped fully to the left channel and the other endpoint being mapped fully to the right channel. For example, if the stereo image is represented by angles in the range of, say, [-180°,180°], then the stereo image angle for a given mono audio signal may be determined by scaling the constrained angular direction of arrival for the mono audio signal by a factor reflecting the difference in the angular intervals, i.e., the constrained angular direction of arrival angle may in this case be scaled by a factor of 3.

Such an approach may in scenarios where the audio rendering is by use of two loudspeakers positioned at the side of the display that presents the corresponding image result in the audio of a given speaker being perceived to originate from the direction in the display scene that corresponds to where it was determined to arrive from in the real scene. Thus, a strong consistency between the presented visual information and auditory information may be achieved.

The generator 107 may further be arranged to adapt the determined positions depending on the zoom factor. For example, in scenarios where the zoom does not change the view direction (e.g., the camera is zoomed without any change in pose or the image generator 113 selects center area of the received video frames), an increased zoom factor may in effect result in a smaller angular interval being presented in the images of the image signal. For example, for a zoom factor of 2, the previously indicated angular interval of [-60°,60°] may be reduced to an interval of [-30°,30°]. In this case, the same approach may be used to determine the positions of the mono audio signals in the stereo image but with the modified angular interval being used rather than the capture angular interval. Thus, the generator 107 may, based on the zoom factor/property, determine an angular range for the images and may proceed to determine the positions of the mono audio signal in the stereo image to match the angular direction of arrivals as long as these fall within the determiner angular image range and otherwise the position may be set to either the left or right channel as appropriate.

Such an approach may provide improved consistency between the spatial information provided by the visual presentation of the images and by the auditory presentation of the stereo signal.

In more detail, for a given mono audio signal from a given beamformer, the generator 107 may proceed to generate the intermediate stereo signal component for that mono audio signal to have a specific position in the stereo image, where that position is determined from the direction of the beam generating the mono audio signal. The determined position may however be subject to a constraint determined in response to the zoom property.

The generator 107 may for mono audio signal, e.g., determined to be within the range of the images, be arranged to generate the intermediate stereo signal component for a given mono audio signal such that the mono audio signal is positioned at the corresponding angle in the stereo image, e.g., by determining the relative amplitude of the mono audio signal in the left and right channel corresponding to the determined angle. However, if the angular direction of arrival is outside the visual range of the images for the current zoom property, the position may be set to correspond to either the left or right channel.

Thus, the generator 107 may typically generate a plurality of intermediate stereo signal components with each of these typically corresponding to one audio source, and for the specific teleconferencing application typically with each intermediate stereo signal component representing a specific speaker. Further, the position in the stereo image in each intermediate stereo signal component is determined dependent on the direction of the audio represented by the intermediate stereo signal component, typically as indicated by the direction of the beam. As the speakers will typically be at different positions, the direction estimates will typically be different, and the positions in the stereo images will typically therefore also be different in the generated intermediate stereo signal components. This may provide an improved audio perception and facilitate e.g., separation or individual identification of speakers. However, the approach is further combined with a flexible and adaptive approach that provides consistency between the audio and the images.

An advantage of the specific approach is that the audio sources may be positioned in the stereo image with an increased degree of freedom and are not limited to the specific exact positions that would be determined by a stereo recording.

The position of a given mono audio signal/audio source in the stereo image of the corresponding intermediate stereo signal component and the stereo audio signal may be determined as a function of the determined audio source direction (direction of arrival/direction of beam). In some embodiments, the generator 107 may first determine the desired position, e.g., an angular position in the stereo image of an intermediate stereo signal component may be determined as a function of the beam direction and subsequently the levels/scale factors for the left and right channels may be determined. In other embodiments, the levels/scale factors corresponding to the desired position may directly be determined as a function of the direction $\phi$, such as, e.g., reflected by the function $f(\phi_i)$ in the above example.

The relationship between the direction of the audio captured by a given beam, henceforth for brevity referred to as the beam direction $\phi$, and the position of the mono audio signal in the stereo image, henceforth referred to the as the stereo image position, may depend on the preferences and requirements of the individual embodiment and application. The dependency on the zoom property, and specifically constraining effect, may also depend on the preferences and requirements of the individual embodiment.

For example, a range of different mappings may be applied, and a number of possible approaches are described in the following. These approaches may for example be performed subject to the angular direction of arrival being within a range/scene area represented by the images as determined in response to the zoom property.

For example, if the beam direction $\phi$ monotonically increases from $-\pi/2$ to $+\pi/2$, the stereo image position may also be arranged to monotonically increase except if outside the image angular range. Thus, the function/relationship mapping the beam direction to the stereo image position may be a monotonic function. If amplitude panning is used, the level/amplitude/scale factors will also be monotonic functions of the beam direction $\phi$, and specifically one of the functions will be monotonically increasing and the other will be monotonically decreasing as a function of $\phi$.

This may provide a desirable user experience in many situations. For example, for a teleconferencing application, the detected speakers may be positioned in the stereo image of the stereo audio signal such that they are well separated yet are in the same order as in the environment being captured. For example, the speakers may be positioned at fixed positions in the stereo image, e.g., starting at a position of the left (or right) channel and then at intervals of $\pi/(N-1)$ but in the same order as in the captured environment. Remote participants listening to the stereo audio signal may then be provided with a spatial experience in which the individual speakers are well separated yet have the same spatial relationship as in the room being captured (e.g., allowing the remote participant to be able to determine the seating order of the participants).

In some embodiments, the stereo image position may be a linear function of the beam direction. For example, a direct mapping of angles of the beam direction to angles of the stereo image position may be used. This may allow a closer correspondence to the captured environment and may provide information to the remote participants of the location of the speakers, such as, e.g., whether they are positioned close to each other or not.
In some cases, the mapping between the beam directions and the stereo image position may include a scaling. For example, again representing the beam direction by an angle in the range/interval of $-\pi/2$ to $+\pi/2$ and the stereo image position by an angle in the range/interval of $-\pi/2$ to $+\pi/2$; the function between these may be linear function with a gradient that is different from one.

For example, the scaling may in many embodiments be arranged to increase/broaden the stereo image by applying a linear function with gradient above 1. For example, if it is known that the beam directions in which the desired sources are (most likely) located in the range from $-\pi/3$ to $+\pi/3$, this can be mapped to the full stereo image range of $-\pi/2$ to $+\pi/2$ using a function having a gradient of 3/2. This may be achieved by directly mapping to the scale factors, e.g., by setting one of the scale factors as a linear function for which $f(-\pi/3)=0$ and $f(\pi/3) = 1$ and setting the other scale factor as a linear function for which $f(-\pi/3)=1$ and $f(\pi/3) = 0$. It will be appreciated that other functions for determining the scale factors may be used including non-linear functions for non-linear amplitude panning approaches.

Thus, the approach may in many embodiments, broaden at least part of the stereo image. Thus, the mapping from the beam direction to the stereo image position may be such that a range/interval of angles representing the beam direction map to a larger range/interval of angles of the stereo image position (with the full range/interval of angles being the same for the beam direction and the stereo image position).

In some embodiments, gradient of less than one may be used and the generator 107 may be arranged to compress the stereo image of the stereo audio signal compared to the captured range. For example, the scaling may in many embodiments be arranged to decrease/narrow the stereo image by applying a linear function but with gradient below 1. For example, if it is known that the beam directions in which the desired sources are (most likely) located in the entire range from $-\pi/2$ to $+\pi/2$ but it is desired to provide a more focused stereo image to the remote participant where all speakers are located within the range from $-\pi/3$ to $+\pi/3$, this can be achieved using a function having a gradient of 2/3. This may be achieved by directly mapping to the scale factors.

Thus, the approach may in many embodiments, narrow at least part of the stereo image. Thus, the mapping from the beam direction to the stereo image position may be such that a range/interval of angles representing the beam direction map to a smaller range/interval of angles of the stereo image position (with the full range of angles being the same for the beam direction and the stereo image position).

In some embodiments, the stereo image position may be a piecewise linear function of the beam direction. For example, different gradients may be used for different ranges of the beam direction. As an example, the central part may be expanded/broadened with the sides being correspondingly compressed to ensure that the entire range is covered. Thus, the gradient may be above 1 for some intervals and below 1 for other intervals.

For example, in some embodiments, a central interval of $-\pi/4$ to $+\pi/4$ of the beam direction may be expanded to the interval of $-\pi/3$ to $+\pi/3$ whereas the peripheral interval of $-\pi/2$ to $-\pi/4$ is mapped to the interval of $-\pi/2$ to $-\pi/3$ and the peripheral interval of $+\pi/4$ to $+\pi/2$ is mapped to the interval of $+\pi/3$ to $+\pi/2$.

Such an approach may provide advantageous performance and an improved user experience in many embodiments. For example, in many teleconferencing applications, multiple speakers may often be positioned centrally with respect to the teleconferencing device with sometimes one or more speakers being positioned more peripherally. Compressing the stereo image at the sides and expanding it centrally may often provide a much improved experience.

In some cases, other non-linear functions may be used and, e.g., non-linear functions may provide a smoother transition between expanded and contracted parts of the stereo image. For example, in many cases a sigmoid function may advantageously be used to map the whole range of the beam direction to the whole range of the stereo image position.

In many embodiments, the combiner 109 may be arranged to generate the stereo audio signal to directly sum/include the intermediate stereo signal components while maintaining the relative audio levels as captured by the microphones.

However, in some embodiments, the combiner 109 may be arranged to adapt an amplitude of one intermediate stereo signal component in the stereo audio signal relative to an amplitude of another intermediate stereo signal component (from a second beam/beamformer). Thus, in some embodiments, the relative amplitudes of different beams/mono audio signals may be adapted by the apparatus.

For example, in some embodiments, a relative gain may be determined for each intermediate stereo signal component with the gain being a function of the beam direction. The gain for a given beam may then be determined by determining the gain for the corresponding beam direction and the determined gain may be applied to both channels of the corresponding intermediate stereo signal component.

The gain function may for example be a function that has a higher gain towards the center than the sides, or may, e.g., have a constant level except for a small range in which a particular relevant or significant audio source is known to be present (or likely to be present).

The apparatus may thus provide an improved user experience by being arranged to emphasize, e.g., particularly significant areas or sources. For example, for a teleconferencing application, the approach may allow that particular areas are emphasized, such as, e.g., speakers towards the center are emphasized or a position where a specific speaker is located (e.g., the chairman of a meeting being conducted by teleconference).

In some embodiments, the combiner 109 may specifically be arranged to exclude a specific mono audio signal/intermediate stereo signal component if the beam direction for the beam that captured the mono audio signal meets a given criterion. The criterion may specifically be that the beam direction falls within a given exclusion interval such that if the beam direction for a given mono audio signal/intermediate stereo signal component falls within the exclusion interval, then the mono audio signal/intermediate stereo signal component is not included in the generated stereo audio signal.

Indeed, in some embodiments, the criterion may be dynamically adaptable, e.g., in response to a user input. For example, during a teleconference a chairman may specify a given range of angles that are to be excluded thereby allowing the chairman to, e.g., exclude a disruptive or unwanted speaker.

It will be appreciated that in some embodiments, the generator 107 and combiner 109 may perform their operations sequentially. For example, the generator 107 may generate N separate stereo signals (and thus N·2 channel signals) which are then fed to the combiner 109 which may proceed to mix them together to form a single stereo audio signal. However, in other embodiments, the two functions may be integrated, and the intermediate stereo signal components may be inherent/implicit in the combined operation. For example, in some embodiments, a single matrix multiplication may be applied to an input vector comprising all the mono audio signals to generate the stereo outputs. For example, for each sample instant, the stereo audio signal samples may be generated by a matrix multiplication:

$$\bar{O} = \bar{\bar{A}} \cdot \bar{S}$$

where $\bar{O}$ represents a 2 component vector comprising the output stereo samples, $\bar{S}$ is a N component vector comprising the N mono audio signal samples, and $\bar{\bar{A}}$ is an 2 by N matrix with coefficients determined as a function of the direction of arrivals $\phi$ as previously described (the coefficients of matrix A may simply be the determined scale factors), and · indicates matrix multiplication.

In the example, each of the formed beams provide a single mono audio signal and thus each audio source selected and separated by a formed beam may be represented by a mono audio signal with no inherent spatial property or characteristic. However, the stereo signal is then generated by combining the individual mono audio signals such that each signal is provided with a spatial property in the form of a position in the stereo image. This "reintroduction" of spatial properties is dependent on the spatial information of the captured signals, and thus the audio sources, by the position being dependent on the direction of arrival (specifically as estimated by the beam direction).

The approach thus synergistically combines the use of beams to separate and isolate audio sources in the scene (and essentially extract the audio component) with an "artificial" generation of a stereo image in order to provide a spatial audio perception, and indeed with these features interworking such that the output spatial image is dependent on the input spatial data.

The approach may in many scenarios provide substantial advantages in comparison to a conventional approach of simply capturing stereo audio that represents the spatial information of the scene from the capture position(s). In particular, it allows for the stereo image of the stereo audio signal to be adapted and optimized for the specific performance that is desired. For example, it may allow that different audio sources, such as specifically speakers, are positioned further apart thereby allowing them to be easier to differentiate by the listener, similar to as in a face-to-face interaction. It also allows the sound sources to be spatially well defined as they can be inserted in the stereo image of the stereo audio signal based on a single mono signal. This may, e.g., allow that the sound sources/speakers are represented as point sources even if they might be perceived more spatially spread if captured by, e.g., a stereo microphone (e.g., due to this capturing reflections reaching the stereo microphone from different directions). Thus, even if the apparatus were to seek to maintain the original spatial relations between the audio source speakers, e.g., by setting the stereo image angle to be equal to the beam direction angle, a more well defined stereo image with sound sources/speakers that are easier to differentiate and separate can be achieved.

Rather than merely capturing the spatial properties of an acoustic scene, the approach uses an interworking between beamforming and artificial positioning to create an output stereo image that can be optimized for the desired performance without being limited by the real world audio properties of the environment being captured. However, the approach further allows that spatial properties of the environment may be reflected, or even retained, in the stereo audio signal.

Further, the approach allows for a dynamic adaptation to improve the consistency between the spatial information provided by the image signal and the audio stereo signal.

The exact algorithm and function for determining the position in the stereo image for a given mono audio signal may be different in different embodiments. The position is as described above typically dependent on both the zoom property and the direction of arrival of the audio of the mono audio signal, and specifically on the beam direction for a beam generating the mono audio signal.

In some embodiments, the position in the stereo image may be determined to have an increasing distance to a center of the stereo image for the zoom property being indicative of an increasing zoom level/factor. Thus, the position may be determined such that the distance from the center is a monotonically increasing function of the zoom level/factor.

An example of such an approach is the approach described above where for a given direction of arrival the position in the stereo image may be determined by scaling the position by a value that reflects the difference in the size of the range of the image relative to the range of the direction of arrival. This may provide a highly suitable operation for scenarios in which the zoom changes only the zoom factor but with the camera/capture direction remaining constant, and thus with the center of the image not changing. In this case, a zooming in operation will result in off center speakers shifting towards the sides of the image, and the described approach may result in the mono audio signals corresponding to these speakers correspondingly being shifted towards the sides of the stereo image. Further, this may automatically adapt such that the movement continues until the audio reaches the edge of the stereo image which corresponds to the direction of arrival of the audio of the mono audio signal corresponding to view direction for the edge of the image for the current zoom factor. Thus, an effect can be achieved where the zooming in on the center of the screen/scene results in a consistent shift of both the representation of the speakers in the image and the corresponding audio in the stereo image until the speaker reaches the edge of the image at which point the audio will remain in the corresponding right or left channel.

In other embodiments, the position in the stereo image may be determined to have a decreasing distance to a center of the stereo image for the zoom property being indicative of an increasing zoom level/factor. Thus, the position may be determined such that the distance from the center is a monotonically decreasing function of the zoom level/factor.

For example, for a given direction of arrival of the mono audio signal, the generator 107 may be arranged to position the mono audio signal in the stereo image such that it becomes more central as the camera or image generator 113 zooms in. This effect may in many embodiments provide a desirable effect. For example, in some embodiments, the zoom direction may be arranged to be in the direction towards the source of the mono audio signal. For example, the zoom control may be arranged to not only zoom in but to also adapt the zoom direction to be towards the direction from which the mono audio signal is detected (e.g., the mono audio signal controlling the zoom may be selected as the extracted mono audio signal with the highest level). Thus, the visual effect may be a zooming in on a source of the audio of the mono audio signal, such as specifically on a speaker. This may be associated with the corresponding mono audio signal being moved towards the center of the image to provide consistent auditory and visual spatial information.

It will be appreciated that the approaches may indeed be combined in many embodiments. For example, in some embodiments, the stereo image position for a first mono audio signal may be determined to have a decreasing distance to the center whereas the stereo image position for a second mono audio signal may simultaneously be determined to have an increasing distance to the center. This may for example be dependent on a zoom direction. For example, if the zoom is in a direction towards the source of the first mono audio signal, then this may be shifted towards the center for an increasing zoom factor whereas other mono audio signals may be shifted further away from the center (assuming the source of the first mono audio signal is closest to the center of the images).

In some embodiments, the generator 107 may be arranged to shift the stereo image position towards the center in response to only considering the zoom factor and without explicitly considering the zoom direction. For example, in some embodiments, a low complexity embodiment may be used where if the zoom factor is above a given threshold, then the mono audio signal is positioned in the center of the stereo image, and if the zoom factor is below the threshold then the mono audio signal is positioned at a position corresponding to the direction of arrival for the mono audio signal, or indeed it may even in some cases be positioned at a predetermined off-center position in the stereo image.

Such an approach may be implemented with low complexity yet may provide a highly advantageous experience in many embodiments. For example, a teleconferencing device may be designed for two speakers positioned next to each other. The device may detect who is speaking and may zoom out to include both speakers when either both speakers are speaking or when nobody is speaking. In this case both speakers are shown in the images and the audiovisual apparatus adapts to position the corresponding mono audio signals on the left and right side respectively. However, if the speech detector detects that only one speaker is currently speaking, the images are adapted to zoom in on the active speaker (e.g. either by the image generator 113 selecting the appropriate area of received frames, by changing the zoom factor and capture direction of the camera, or by using a multi-sensor camera that can capture three different images and select between these). In this case, the zoom factor will be determined to be above the threshold and the mono audio signal of the active speaker is positioned in the center of the stereo image (and indeed possibly both mono audio signals may in some embodiments be positioned in the center of the stereo image as the mono audio signal corresponding to the non-active speaker may be insignificant in comparison to the mono audio signal of the active speaker).

In some embodiments, the generator 107 is arranged to adapt a gain/level of the intermediate stereo signal component in the stereo audio signal in dependence on a zoom gain/level and/or zoom direction indicated by the zoom property. In particular, in many embodiments, the zoom factor and/or direction may be used to determine a range of view directions of the scene which are covered by the images. The gain/level of the individual intermediate stereo signal components may then be set depending on the direction of arrival for the corresponding mono audio signal relative to the determined view directions. For example, the gain/level may be decreased the further the direction of arrival is from the center of the view direction range of the image. The gain/level of the intermediate stereo signal component for a given mass may be determined as a monotonically decreasing function of a distance between a direction of arrival for the mono audio signal of the intermediate stereo signal component and a center of a range of view directions covered by the images for the (current) zoom property (value). In some embodiments, the gain/level of the intermediate stereo signal component for a given mono audio signal may be determined as a monotonically increasing function of a distance between a direction of arrival for the mono audio signal of the intermediate stereo signal component and an extreme of a range of view directions covered by the images for the (current) zoom property (value).

In many embodiments, the audio levels may in such embodiments be dynamically adapted to emphasize audio sources towards the center of the images. As a specific example, the gains/levels of all intermediate stereo signal component having a mono audio signal with a direction of arrival with a distance to a center of the view direction range below a threshold may be kept at a constant level and with the gain/level decreasing with distance outside the threshold.

In many embodiments, the generator 107 may be arranged to reduce the level of the intermediate stereo signal component in the stereo audio signal if the direction of arrival is outside the viewing area/range of the images for the current zoom. For example, if the direction of arrival is determined to be outside the viewing range/interval, then a gain for the intermediate stereo signal component may be reduced, and in many embodiments the level/gain may be set to zero such that the corresponding mono audio signal is effectively removed from the stereo signal. In such embodiments, the audio representation presented by the stereo signal may only include audio sources that are presented in the image signal.

As previously described, in some embodiments, the intermediate stereo signal components for mono audio signals that are outside the viewing area/range may be retained in the stereo image but positioned entirely in the right or left channel, i.e., at the extreme points in the stereo signal. Thus, the stereo signal may represent audio sources outside the images as arising from just outside the images.

In many embodiments, the generated audiovisual signal may include indications of any mono audio signal which is outside the image viewing area. Thus, the audiovisual apparatus may be arranged to include an indication of an audio source being outside the images in response to a detection that the direction of arrival is outside the viewing area of the images for the current zoom. In many embodiments, the audiovisual signal may include an indication that an audio source/mono audio signal has been excluded from the provided stereo signal. This may for example allow a remote end to provide an indication to the remote user (e.g., by text overlaying the image) that one or more audio sources are missing.

In many embodiments, the mono audio signal of audio sources outside the images may thus not be included in the stereo signal, and often are not included in the audiovisual signal. However, in some embodiments, the audiovisual apparatus may be arranged to include such a mono audio signal as a separate signal. This may allow the remote end to determine whether to include the mono audio signal in the rendered audio or not. For example, the indication may indicate whether the mono audio signal is outside the images on the left or right sides, and the remote device may add the mono audio signal to the corresponding rendered audio channel.

It will be appreciated that although the previous description has focused on examples where the decision and considerations are predominantly one dimensional in terms of considering only the impact of the zoom on the horizontal directions. This will be practical in many considerations such as e.g., teleconferencing applications where audio sources tend to be at roughly similar vertical positions. It is also in particular compatible with the generation of a stereo image which tends to be perceived as a one dimensional horizontal image.

However, it will be appreciated that the described principles, approaches, and examples as appropriate may be extend to e.g., a two dimensional case where the vertical direction may also be considered. For example, rather than considering a single view direction range to determine if mono audio signals represent audio sources that are outside the viewport for the current zoom, both a vertical and horizontal direction component may be considered. Thus, rather than just considering a one-dimensional view direction range, a two-dimensional view area may be considered. E.g., if the direction of arrival for a given mono audio signal is determined to be outside the view area for the current zoom, then the level of the mono audio signal may be reduced or e.g., set to zero (corresponding to the mono audio signal being removed from the generated stereo signal).

As previously described, the image generator 113 may in many embodiments be arranged to control the zoom, including either the zoom direction and/or the zoom factor. As mentioned, the image generator 113 may in some embodiments control the camera and/or may perform a digital zoom.

In many embodiments, the zoom may be performed in response to the direction of arrival. For example, the zoom factor may be set such that it (just) includes all the determined directions. Thus, if one person is speaking and only one mono audio signal is detected, then the image generator 113 may be arranged to zoom in on that speaker. The direction may be set to match the direction of arrival for that mono audio signal and with the zoom factor set to a maximum level. If it is detected that two or more mono audio signals are generated corresponding to two active speakers, the zoom level may be set to be sufficiently large to just cover both direction of arrivals and with the zoom direction to be set at the midpoint between the two extreme direction of arrivals, resulting in a zooming out to include the two active speakers. Thus, the image generator 113 will control the zoom to include all active audio sources, such as specifically all active speakers.

In many embodiments, the image generator 113 may be arranged to control the zoom in response to the number of mono audio signals that are generated/detected, and specifically in response to the number of audio sources that are detected/active. Specifically, the zoom may be set dependent on whether one or more active audio sources/ speakers are detected. For example, if one active audio source/ speaker is detected, the images may be generated to zoom in on that single source, e.g. by setting the zoom factor to a suitably high value and the zoom direction to correspond to the direction of arrival. If none or more than one active audio sources are detected, the zoom may for example be set to a default level that captures as much of the scene as possible. Thus, if none or more than one speaker is active, the entire scene/room is presented and if only one speaker is active, the image generator 113 may zoom in on that speaker.

The previous description has mainly considered a situation where the origin of video and audio coincides, which will be the case in many embodiments and scenarios. However, it is not necessary for the origins to be the same. For example, if the distance between the origins, specifically the distance between the center of the camera and the center of the linear array, is known, a conversion can be made.

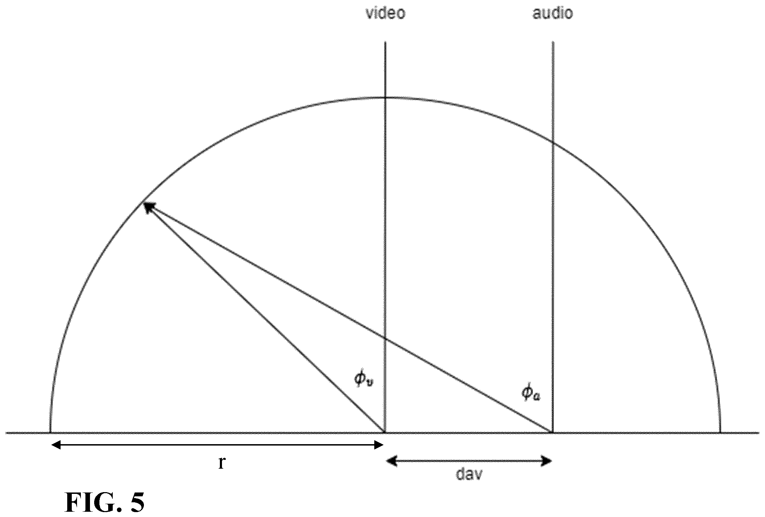

For example, FIG. 5 illustrates an example where half a circle is shown with radius r and with the center point representing the origin of the video. The center point of the audio locator is positioned at distance dav to the right.

Then, applying goniometry math, the relation between the audio angle of incidence $\phi_a$ and the video viewing angle $\phi_v$ is given by:

$$\phi_a = g(\phi_v) = \arctan(\,(r \sin \phi_v + \text{dav}\,) / (r \cos \phi_v\,))$$

For the function $f(\phi_a)$ (where $f(\phi_a)$ again is a function of the beam direction/angle of incidence $\phi_a$ for the beam-former and with the function being bounded between 0 and 1), we then get:

$$f(\phi_a) = g(\phi_{v,l}) = 1,$$

$$f(\phi_a) = g(\phi_{v,r}) = 0,$$

and

$$f(\phi_a) = g((\phi_{v,l} + \phi_{v,r})/2\,) = 0.5.$$

The audio apparatus(s) may specifically be implemented in one or more suitably programmed processors. The different functional blocks may be implemented in separate processors and/or may, e.g., be implemented in the same processor. An example of a suitable processor is provided in the following.

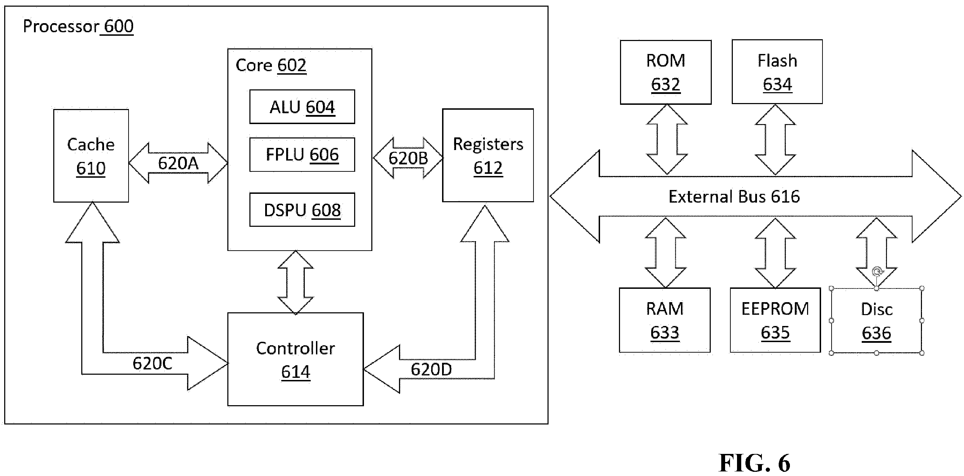

FIG. 6 is a block diagram illustrating an example processor 600 according to embodiments of the disclosure. Processor 600 may be used to implement one or more processors implementing an apparatus as previously described or elements thereof (including in particular one more artificial neural network). Processor 600 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 600 may include one or more cores 602. The core 602 may include one or more Arithmetic Logic Units (ALU) 604. In some embodiments, the core 602 may include a Floating Point Logic Unit (FPLU) 606 and/or a Digital Signal Processing Unit (DSPU) 608 in addition to or instead of the ALU 604.

The processor 600 may include one or more registers 612 communicatively coupled to the core 602. The registers 612 may be implemented using dedicated logic gate circuits (e.g., flip-flops) and/or any memory technology. In some embodiments the registers 612 may be implemented using static memory. The register may provide data, instructions and addresses to the core 602.

In some embodiments, processor 600 may include one or more levels of cache memory 610 communicatively coupled to the core 602. The cache memory 610 may provide computer-readable instructions to the core 602 for execution. The cache memory 610 may provide data for processing by the core 602. In some embodiments, the computer-readable instructions may have been provided to the cache memory 610 by a local memory, for example, local memory attached to the external bus 616. The cache memory 610 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 600 may include a controller 614, which may control input to the processor 600 from other processors and/or components included in a system and/or outputs from the processor 600 to other processors and/or components included in the system. Controller 614 may control the data paths in the ALU 604, FPLU 606 and/or DSPU 608. Controller 614 may be implemented as one or more state machines, data paths and/or dedicated control logic. The gates of controller 614 may be implemented as standalone gates, FPGA, ASIC or any other suitable technology.

The registers 612 and the cache 610 may communicate with controller 614 and core 602 via internal connections 620A, 620B, 620C and 620D. Internal connections may be implemented as a bus, multiplexer, crossbar switch, and/or any other suitable connection technology.

Inputs and outputs for the processor 600 may be provided via a bus 616, which may include one or more conductive lines. The bus 616 may be communicatively coupled to one or more components of processor 600, for example the controller 614, cache 610, and/or register 612. The bus 616 may be coupled to one or more components of the system.

The bus 616 may be coupled to one or more external memories. The external memories may include Read Only Memory (ROM) 632. ROM 632 may be a masked ROM, Electronically Programmable Read Only Memory (EPROM) or any other suitable technology. The external memory may include Random Access Memory (RAM) 633. RAM 633 may be a static RAM, battery backed up static RAM, Dynamic RAM (DRAM) or any other suitable technology. The external memory may include Electrically Erasable Programmable Read Only Memory (EEPROM) 635. The external memory may include Flash memory 634. The External memory may include a magnetic storage device such as disc 636. In some embodiments, the external memories may be included in a system.

It will be appreciated that the approach may further advantageously in many embodiments further include an adaptive canceller which is arranged to cancel a signal component of the beamformed audio output signal which is correlated with the at least one noise reference signal. For example, similarly to the example of FIG. 1, an adaptive filter may have the noise reference signal as an input and with the output being subtracted from the beamformed audio output signal. The adaptive filter may, e.g., be arranged to minimize the level of the resulting signal during time intervals where no speech is present.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by, e.g., a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and, in particular, the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

**Claims**

1. An apparatus for generating an audiovisual signal, the apparatus comprising:

an audio receiver (101) arranged to receive at least one microphone signal from a microphone arrangement capturing a scene having a plurality of audio sources;

an extractor (103) arranged to extract at least one mono audio signal representing an audio source of the plurality of audio sources from the at least one microphone signal;

a video receiver (102) arranged to receive a video signal from a camera capturing the scene;

an image generator (113) arranged to generate an image signal comprising images generated from the video signal;

a zoom determiner (115) arranged to determine a zoom property for the images;

an audio component generator (107) arranged to generate an intermediate stereo signal component for each of the at least one mono audio signal, a first intermediate stereo signal component for a first mono audio signal of the at least one mono audio signal comprising the first mono audio signal positioned at a first position in a stereo image of the first intermediate stereo signal component;

a combiner (109) arranged to generate a stereo audio signal to include at least one intermediate stereo signal component;

an output (111) arranged to generate the audiovisual signal to comprise the stereo audio signal and the image signal; and

wherein the audio component generator (107) is arranged to determine the first position in dependence on the zoom property.

2. The audio apparatus of claim 1 wherein the zoom property comprises a zoom level.

3. The apparatus of claim 1 or 2 wherein the zoom property comprises a zoom direction.

4. The apparatus of any previous claim further comprising a direction determiner (117) arranged to determine a direction of arrival for audio from the audio source; and wherein the audio component generator (107) is arranged to determine the first position in dependence on the direction of arrival.

5. The apparatus of claim 4 wherein the audio component generator (107) is arranged to set the first position to an end point position in the stereo image if the direction of arrival is outside a viewing area of the images for the zoom property.

6. The apparatus of claim 4 or 5 wherein the output (111) is arranged to include an indication of the audio source being outside the images in response to a detection that the direction of arrival is outside a viewing area of the images for the zoom property.

7. The apparatus of any previous claims 4-6 wherein the image generator (113) is arranged to adapt a zoom control parameter for the images in response to the direction of arrival.

8. The apparatus of any previous claim wherein the at least one microphone signal comprises a plurality of microphone signals and the extractor (103) comprises plurality of audio beamformers (201) receiving the plurality of microphone signals, each audio beamformer being arranged to generate a beam audio signal representing audio captured by a beam formed by the audio beamformer, the first mono audio signal being a beam audio signal of a first beam formed by a first audio beamformer of the plurality of beamformers, and the audio component generator (107) being arranged to determine the first position in dependence on a direction of the first beam.

9. The apparatus of any previous claim wherein the audio component generator (107) is arranged to determine the first position to have an increasing distance to a center of the stereo image for the zoom property being indicative of an increasing zoom level.

10. The apparatus of any of the previous claims 1-8 wherein the audio component generator (107) is arranged to determine the first position to have a decreasing distance to a center of the stereo image for the zoom property being indicative of an increasing zoom level.

11. The apparatus of any previous claim wherein the audio component generator (107) is arranged to adapt a level of the intermediate stereo signal component in the stereo audio signal in dependence on a zoom level indicated by the zoom property.

12. The apparatus of claim 11 wherein the audio component generator (107) is arranged to adapt the level of the intermediate stereo signal component in the stereo audio signal in dependence on the first position relative to a viewing area of the images for the zoom level.

13. The apparatus of any previous claim 1 wherein the apparatus is a teleconferencing apparatus and the output (111) is arranged to transmit the audiovisual signal to a remote teleconferencing device.

14. A method of generating an audiovisual signal, the apparatus comprising:

receiving at least one microphone signal from a microphone arrangement capturing a scene having a plurality of audio sources;
extracting at least one mono audio signal representing an audio source of the plurality of audio sources from the at least one microphone signal;
receiving a video signal from a camera capturing the scene;
generating an image signal comprising images generated from the video signal; determine a zoom property for the images;
generating an intermediate stereo signal component for each of the at least one mono audio signal, a first intermediate stereo signal component for a first mono audio signal of the at least one mono audio signal comprising the first mono audio signal positioned at a first position in a stereo image of the first intermediate stereo signal component;
generating a stereo audio signal to include at least one intermediate stereo signal component;
generating the audiovisual signal to comprise the stereo audio signal and the image signal; and
determining the first position in dependence on the zoom property.

15. A computer program product comprising computer program code means adapted to perform all the steps of claim 14 when said program is run on a computer.

FIG. 1

FIG. 2

**FIG. 3**

FIG. 4

EP 4 462 769 A1

FIG. 5

**FIG. 6**

Europäisches
Patentamt

European
Patent Office

Office européen
des brevets

# EUROPEAN SEARCH REPORT

**Application Number**

EP 23 17 2098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/289259 A1 (RUDBERG TORE [SE] ET AL) 19 September 2019 (2019-09-19) * paragraphs [0008], [0018], [0020], [0050] - [0060] * | 1-15 | INV.<br>H04N7/14<br>G10L13/00<br>H04M3/56<br>H04R3/00<br>H04S7/00<br>H04R27/00 |
| Y | US 2009/116652 A1 (KIRKEBY OLE [FI] ET AL) 7 May 2009 (2009-05-07) * paragraphs [0004], [0011], [0045] * | 1-15 | |
| Y | US 2011/264450 A1 (JANSE CORNELIS PIETER [NL] ET AL) 27 October 2011 (2011-10-27) * paragraphs [0049] - [0060] * | 1-15 | |
| A | US 2022/103963 A1 (SATONGAR DARIUS A [US] ET AL) 31 March 2022 (2022-03-31) * paragraphs [0223], [0250] * | 1-15 | |
| A | Delikaris-Manias Symeon: "Parametric spatial audio processing utilising compact microphone arrays", Parametric spatial sound reproduction using optimal mixingSpatial filtering based on cross-pattern coherence (CroPaC), 1 November 2017 (2017-11-01), pages 1-85, XP055952725, Retrieved from the Internet: URL:https://www.researchgate.net/publicati on/321252752_Parametric_spatial_audio_proc essing_utilising_compact_microphone_arrays [retrieved on 2022-08-18] * the whole document * | 1-15 | |
| A | WO 2023/021390 A1 (CLEARONE INC [US]) 23 February 2023 (2023-02-23) * paragraph [0014] * | 5-7 | |
| A | WO 2013/169623 A1 (QUALCOMM INC [US]) 14 November 2013 (2013-11-14) * paragraphs [0111] - [0112] * | 1-15 | |

**TECHNICAL FIELDS SEARCHED (IPC)**

H04N
H04S
H04M
G10L
H04R

The present search report has been drawn up for all claims

| Place of search | Date of completion of the search | Examiner |
|---|---|---|
| Berlin | 10 October 2023 | Bertrand, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 2098

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2023

| Patent document cited in search report | Publication date | Patent family member(s) | | Publication date |
|---|---|---|---|---|
| US 2019289259 A1 | 19-09-2019 | CN | 111602414 A | 28-08-2020 |
| | | EP | 3741135 A1 | 25-11-2020 |
| | | US | 2019222804 A1 | 18-07-2019 |
| | | US | 2019289259 A1 | 19-09-2019 |
| | | WO | 2019143565 A1 | 25-07-2019 |
| US 2009116652 A1 | 07-05-2009 | CN | 101843114 A | 22-09-2010 |
| | | EP | 2208363 A1 | 21-07-2010 |
| | | EP | 2613564 A2 | 10-07-2013 |
| | | US | 2009116652 A1 | 07-05-2009 |
| | | WO | 2009056956 A1 | 07-05-2009 |
| US 2011264450 A1 | 27-10-2011 | CN | 102265643 A | 30-11-2011 |
| | | EP | 2382799 A1 | 02-11-2011 |
| | | JP | 5538425 B2 | 02-07-2014 |
| | | JP | 5859600 B2 | 10-02-2016 |
| | | JP | 2012513701 A | 14-06-2012 |
| | | JP | 2014180008 A | 25-09-2014 |
| | | KR | 20110099750 A | 08-09-2011 |
| | | US | 2011264450 A1 | 27-10-2011 |
| | | WO | 2010073193 A1 | 01-07-2010 |
| US 2022103963 A1 | 31-03-2022 | CN | 116210218 A | 02-06-2023 |
| | | EP | 4201084 A2 | 28-06-2023 |
| | | US | 2022103963 A1 | 31-03-2022 |
| | | US | 2023020542 A1 | 19-01-2023 |
| | | WO | 2022067099 A2 | 31-03-2022 |
| WO 2023021390 A1 | 23-02-2023 | NONE | | |
| WO 2013169623 A1 | 14-11-2013 | CN | 104254818 A | 31-12-2014 |
| | | EP | 2847650 A1 | 18-03-2015 |
| | | US | 2013300648 A1 | 14-11-2013 |
| | | US | 2017308164 A1 | 26-10-2017 |
| | | WO | 2013169623 A1 | 14-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7146012 B
- US 7602926 B

- US 6774934 B

**Non-patent literature cited in the description**

- Audio Source Separation and Speech Enhancement. John Wiley & Sons, October 2018

- **F. GRONDIN et al.** Fast Cross-correlation for TDOA Estimation on Small Aperture Microphone Arrays. *arXiv:2204.13622*